# EUROPEAN PATENT APPLICATION

(11) **EP 4 070 928 A1**
(43) Date of publication of application: **12.10.2022**
(21) Application number: 22166841.1
(22) Date of filing: 05.04.2022
(51) Int. Cl.: B29B 7/60, B29C 48/285, B29C 48/797, B29B 17/00

(54) **APPARATUS FOR LOADING FRAGMENTS OF THERMOPLASTIC FILM IN AN EXTRUDER, PARTICULARLY FOR RECYCLING THERMOPLASTIC MATERIAL, AND OPERATING METHOD THEREOF**

(30) Priority: 06.04.2021 IT 202100008426
(71) Applicant: I.C.M.A. San Giorgio Industria Costruzioni Macchine E Affini S.p.A., 20034 San Giorgio Su Legano (MI) (IT)
(72) Inventor: MENNUTI, Francesco, 20034 SAN GIORGIO SU LEGNANO MI (IT); ROVEDA, Diego, 20025 LEGNANO MI (IT); COLOMBO, Giorgio Natale, 20025 LEGNANO MI (IT)
(74) Representative: Modiano, Micaela Nadia

(57) **Abstract**

An apparatus (1) for loading fragments of thermoplastic film (FP) in an extruder (2) comprising a hopper (3) with at least one hopper body (31), a transfer screw (4) which extends at least partially in the hopper body (31) and has a substantially vertical rotation axis (Y), a conveyance duct (5) which is connected between the hopper (3) and an extruder (2) and in which a part of the transfer screw (4) is accommodated and acts, the conveyance duct (5) comprising at least one air extraction system (6) configured to extract an air flow at least in the duct (5), characterized in that the apparatus (1) further comprises: a filling tank (13) and a screw feeder (10) which connects the filling tank (13) to the hopper (3) in order to load into the latter fragments of thermoplastic film (FP) contained in the tank (13), the hopper body (31) being closed hermetically toward the outside environment and functionally connected to the screw feeder (10), so that in the operating condition of the apparatus (1) the hopper body (31) is internally at a pressure that is lower than the external ambient pressure.

## Description

The present invention relates to an apparatus for loading fragments of thermoplastic film in an extruder, particularly usable in a process for recycling thermoplastic material, and to an operating method thereof.

In greater detail, the present apparatus and associated method are used to feed extruders of plastic materials, preferably co-rotating twin-screw extruders.

The expression "fragments of thermoplastic film" refers, in this description and in the accompanying claims, to the fragments that derive from the shredding of products such as bags, pouches, sheets, packaging and the like, which after shredding have the appearance of fragments of irregular shape, with a size normally comprised between 200 micrometers and 5 centimeters and an apparent density of less than 0.35 kg/dm³.

It is useful to specify also that materials with dimensions below 200 micrometers are considered "powdery" and are to be considered explicitly excluded from the scope of the invention: powdery materials in fact have other particularities with respect to fragments. In this sense, in fact, treatment of powdery material is in certain respects easier since fragments of thermoplastic film, differently from powdery material, tend to float in the air and their conveyance and feeding becomes particularly complex.

The application for which the present invention is mainly intended relates to the recycling of the thermoplastic film that constitutes bags, pouches, packaging, and the like.

In the recycling process, these items are usually cut or shredded into fragments of film having the above cited dimensions, which must be fed to the extruder of the extrusion system, where they are melted to be then ultimately recycled.

In the background art, in order to load the material to be processed into the extruder, at the chamber in which the screw or screws operate (depending on whether the extruder is of the single- or twin-screw type), it is known to use feeding hoppers.

A particularly useful hopper has been developed by the same Applicant and described in Italian patent application no. 102017000148711.

This hopper comprises a funnel-shaped body and a transfer screw which extends at least partly within the body, and a duct for conveyance to the extruder which defines an internal conveyance volume for the fragments of thermoplastic film, the duct extending between the hopper body and an output end, which is configured to feed a chamber of the extruder in which at least one extrusion screw is active, wherein in at least part of the conveyance volume of the conveyance duct at least part of the transfer screw is active for the forced conveyance of the fragments of thermoplastic film from the hopper body to the chamber of the extruder, and wherein the conveyance duct comprises an extraction portion for the extraction of a flow of air from the conveyance volume, in said extraction portion there being at least one filtering unit to separate the fragments of thermoplastic film from the flow of extracted air.

Although this solution is functional, the Applicant has found that it can be further improved.

In particular, the improvements are linked to the finding that the fragments of thermoplastic film (for example film of polypropylene, polyethylene and the like) are extremely light and, in view of their shape, tends to float or drift in the air inside the hopper, generating a sort of "rotating plug" which follows the movement of the transfer screw and makes it difficult to convey them into the chamber of the extruder.

Moreover, the generation of the negative pressure useful for the transfer of the fragments also is subject to improvements, since in the hopper of the background art there were fragment loading ports, open at the top of the hopper, through which ports an air flow passes which makes it more difficult to generate the negative pressure useful to convey the fragments.

Moreover, the Applicant has found another aspect of the known solution that can be improved, which is linked to the fact that in the known solution the fragments in the hopper (i.e., after loading through the ports has occurred) tend to form uneven masses, having regions in which the fragments are denser and regions in which they are less dense; this entails that the overall mass of the fragments fed to the conveyance duct (and therefore to the extruder) has a great variability, which constitutes a drawback from the point of view of a stable recycling process.

The aim of the present invention is to provide an apparatus for loading fragments of thermoplastic film in an extruder that solves the technical problem described above, obviates the drawbacks and overcomes the limitations of the background art, allowing to improve the efficiency of the process for the extrusion of fragments of thermoplastic film and facilitate its execution.

Within this aim, an object of the present invention is to provide an apparatus for loading fragments of thermoplastic film in an extruder that allows efficient loading, avoiding or reducing the accumulations of film fragments in the hopper.

Another object of the present invention is to provide an apparatus for loading fragments of thermoplastic film in an extruder that allows uniform and continuous loading.

A further object of the invention is to provide an apparatus for loading fragments of thermoplastic film in an extruder that is capable of giving the greatest assurances of reliability and safety in use.

Another object of the invention is to provide an apparatus for loading fragments of thermoplastic film in an extruder that is easy to provide and economically competitive if compared with the background art.

Another object of the invention is to provide a loading apparatus that can ensure higher production.

The above aim and objects and others which will become better apparent hereinafter are achieved by an apparatus according to claim 1.

In particular, the present invention, in its general outline, relates to an apparatus for loading fragments of thermoplastic film in an extruder, which comprises
- a hopper with at least one hopper body,
- a transfer screw, which extends at least partially in the hopper body and has a substantially vertical rotation axis,
- a conveyance duct, which is connected between the hopper and an extruder and in which a part of the transfer screw is accommodated and acts, said conveyance duct comprising at least one air extraction system configured to extract an air flow at least in said duct,
and is characterized in that the apparatus further comprises:
- a filling tank and
- a screw feeder which connects the tank to the hopper in order to load fragments of thermoplastic film contained in the tank into the latter,
said hopper body being closed hermetically toward the outside environment and functionally connected to said screw feeder, so that in the operating condition of the apparatus the hopper body has an internal pressure that is lower than the external ambient pressure.

According to an optional and advantageous characteristic, the screw feeder comprises a feed duct and a feed screw inside it, the feed screw extending, even along part of its length, inside said tank.

According to an optional and advantageous characteristic, the feed screw of the screw feeder has a substantially horizontal rotation axis X.

According to an optional and advantageous characteristic, the hopper body comprises a frustum-shaped lower portion surmounted by a cylindrical upper portion, at which cylindrical upper portion the feed duct of the screw feeder is coupled hermetically, said feed duct leading inside the body at the cylindrical upper portion thereof, said transfer screw extending along at least part of the frustum-shaped lower portion of the body.

According to an optional and advantageous characteristic, the apparatus preferably comprises at least one movement device which avoids the accumulation of material in the upper part of the hopper and the consequent discontinuity of the feed flow.

In a first embodiment, the movement device comprises a plurality of scraper vanes which can rotate about the rotation axis Y of the transfer screw, are arranged inside the hopper body and, in the active condition, face intermittently the open port of the feed duct that leads into the hopper body, so as to avoid the accumulation of material at the open port of the feed duct.

In a second, embodiment, the transfer screw extends within the hopper body so that a portion of the transfer screw faces the open port of the feed duct that leads into the hopper body, so that said movement device is provided by means of the portion of the transfer screw that faces the open port of the feed duct; in this second embodiment, in addition to avoiding the accumulation of material at the port of the feed duct, the outflow of the plastic material in its descent from the upper part of the hopper is also facilitated.

According to an optional and advantageous characteristic, the frustum-shaped lower portion of the hopper body is provided with internal walls which have at least one, preferably multiple rotation-preventing ribs, which protrude from the internal walls in a radial direction toward the screw.

According to an optional and advantageous characteristic, the extraction system has at least one extraction portion along the duct, said extraction portion comprising a filtering unit in order to separate the fragments of thermoplastic film from the flow of extracted air.

According to an optional and advantageous characteristic, the conveyance duct preferably comprises a first flow breaker portion and a second flow breaker portion which are arranged along the duct upstream and downstream of the extraction portion, said first and second flow breaker portions comprising sawtooth-shaped internal duct walls.

According to an optional and advantageous characteristic, the first and second flow breaker portions each have a ratio between the length h1 and the diameter d equal to or greater than 0.4, wherein the term length h1 refers to the extension along said longitudinal axis Y and the term diameter d refers to the inside diameter of the conveyance duct at the flow breaker portion 8.

A further object of the invention is a method of operating the apparatus according to the invention, wherein:
the transfer screw rotates about its own rotation axis Y at a speed comprised between 50 and 200 RPM,
an extraction of a flow of air is applied in the extraction portion with a negative pressure preferably comprised between -0.1 bars and -0.5 bars,
a filtering of the extracted air is performed in the extraction portion by means of a filter provided with holes which have a diameter comprised between 0.5 and 3 mm, preferably approximately equal to 2 mm,
the conveyance duct is kept substantially at a temperature lower than 80°C, preferably at a temperature comprised between 15°C and 35°C,
so as to allow the treatment of fragments of thermoplastic film which have a maximum piece size comprised between 200 micrometers and 5 centimeters and a density of less than 0.35 kg/dm³ loaded into the tank.

Further characteristics and advantages of the present invention will become better apparent from the description of a preferred but not exclusive embodiment of an apparatus for loading fragments of thermoplastic film in an extruder, illustrated by way of non-limiting example with the aid of the accompanying drawings, wherein:

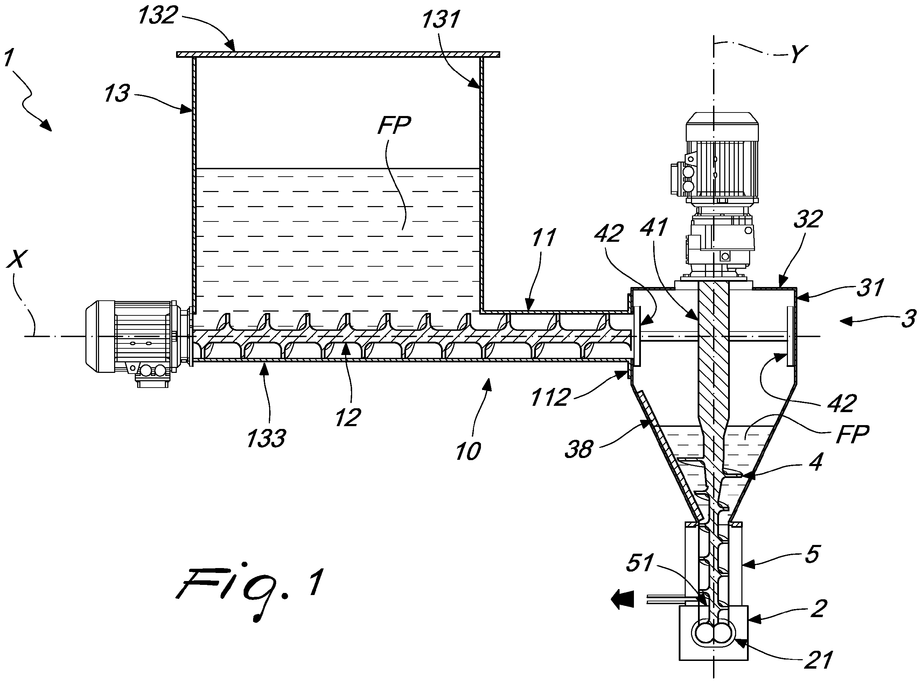

Figure 1 is a schematic sectional view of an apparatus for loading fragments of thermoplastic film in an extruder according to the invention;
Figure 2 is an exploded detail view of the conveyance duct and of part of the transfer screw;
Figures 3 and 4 are respectively a perspective view and a plan view of a first flow breaker portion of the conveyance duct;
Figure 5 is a sectional view from above of the frustum-shaped portion of the hopper body and of the screw;
Figure 6 is a schematic sectional view of a second embodiment of the apparatus for loading fragments of thermoplastic film in an extruder according to the invention.

With reference to the figures, the apparatus for loading fragments of thermoplastic film, particularly recycled fragments, in an extruder is generally designated by the reference numeral 1 in its first embodiment and by the reference numeral 100 in the second embodiment.

The description that follows is focused on the first embodiment 1, but it can also be applied to the second embodiment 100 which has the same parts with the same reference numeral except for the differences (which will be discussed hereinafter) related to the screw 4A and to the movement device.

The apparatus 1 is configured for the treatment of fragments of thermoplastic films FP, which have a piece size (i.e., a maximum size) comprised between 200 micrometers and 5 centimeters and a density of less than 0.35 kg/dm³.

The apparatus 1 is functionally connected to an extruder 2; the extruder 2 can be of the single-screw type, but preferably it is of the twin-screw type (as shown) and even more preferably of the co-rotating twin-screw type.

The apparatus 1 according to the invention, following the flow of the film fragments FP inside it, comprises a filling tank 13 which is connected to a screw feeder 10.

Such screw feeder comprises a feed duct 11 and a feed screw 12 arranged inside it; the feed screw 12 extends, even for part of its length, inside the filling tank 13, proximate to its bottom 133.

Preferably, the rotation axis X of the feed screw 12 is substantially horizontal, so that the material (the fragments of thermoplastic film) are conveyed in the feed duct 11 by virtue of the rotary motion of the feed screw 12, without the aid of the force of gravity; the feed screw 12 is preferably driven by a dedicated electric motor.

The horizontal arrangement of the screw 12 and of the duct 11 causes the film fragments FP contained in the filling tank 13 to accumulate and be compacted in the helical chamber of said feed screw 12 and therefore to act as a sort of "plug" in order to prevent or hinder the passage of air from the tank 13 towards the hopper 3, located downstream.

The tank 13 in fact has an upper loading opening 131, which is preferably closed or closable by a cover 132. A hermetic seal is preferably not provided between the cover 132 and the opening 131, since the cover 132 (if present) must be easily removable in order to allow the loading of the tank 13 manually (by means of an operator) or in an automated manner (for example with a conveyor belt), as needed. For this purpose, in some embodiments the cover 132 is provided with loading ports (not shown) which are open toward the outside environment.

The apparatus 1 further comprises, downstream (in the direction of advancement of the fragments FP) of the feed duct 11, a hopper 3; said hopper in turn comprises a hopper body 31, a transfer screw 4 which extends at least partly in the hopper body 31, and a conveyance duct 5 which is connected to the extruder 2 and in which a part of the transfer screw 4 is accommodated and acts, the remaining part being accommodated and acting in at least part of the hopper body 31.

The feed duct 11 and the hopper body 31 are connected hermetically, preferably by virtue of a flanged coupling with a sealing gasket 112.

The feed duct 11, having a substantially horizontal axis which coincides with the rotation axis X of the feed screw 12, opens at the upper part of the hopper body 31.

The hopper body 31 preferably has a frustum-shaped lower portion which is surmounted by a cylindrical upper portion; in this embodiment, the feed duct 11 preferably leads out preferably at the cylindrical upper portion of the body 31.

The cylindrical upper portion of the body 31 is closed, substantially hermetically, toward the outside environment by virtue of a hopper cover 32; since the upper cover 32 closes the hopper hermetically, the pressure inside the body 31 is substantially lower than the external atmospheric pressure; this aspect will become better apparent hereinafter and arises essentially from the fact that an air extraction system is active in the conveyance duct 5 downstream of the hopper.

The conveyance duct 5 instead opens at the smaller end face of the frustum of the lower portion of the body 31.

The transfer screw 4 preferably extends along at least part of the frustum-shaped lower portion of the body 31.

The transfer screw 4 has a substantially vertical rotation axis Y and is driven by a dedicated electric motor which is arranged preferably above the hopper 3 and is connected to its hopper cover 32.

Transmission of the motion from the motor of the screw to the transfer screw 4 is provided by means of a shaft 41 which couples the screw 4 to the shaft of the dedicated motor; the shaft 41 is concentric with the rotation axis Y of the screw 4 and is arranged centrally (in the plan view) in the hopper body 31.

Preferably, the apparatus 1 comprises a device for moving the open port of the feed duct 11 which is configured to keep the output port of the duct 11 free from the plastic fragments.

In its general outline, the movement device is configured to avoid the accumulation of material in the upper part of the hopper and thus avoid a consequent discontinuity of the feed flow. For this purpose, the movement device, in its general outline, has at least one scraper blade which is designed to pass, during an operating condition of the apparatus, so as to skim the open port of the duct 11; preferably, the scraper blade is coupled to the shaft 41 of the transfer screw.

In the first embodiment, the at least one scraper blade of the movement device comprises one or more scraper vanes 42, which are internal to the hopper body 31; as will become better apparent hereinafter, in the second embodiment it is instead the transfer screw itself which also provides, at a portion thereof, the scraper blade of the movement device.

Going back to the first embodiment 1, preferably the scraper vanes 42 are coupled to the shaft 41 and can rotate with it about the axis Y.

The scraper vanes 42 extend in the upper cylindrical portion of the hopper body 31 and are adjacent and close (but not in contact, in order to avoid wear phenomena) to the internal walls of said hopper.

In particular, the scraper vanes 42 face (in their rotation which is integral with the shaft 41) the region in which the feed duct 11 leads into the body 31; in this manner, the scraper vanes 42, in operation, prevent the plastic fragments from accumulating at the output port of the feed duct 11 and ensure that the fragments FP conveyed by the screw 12 are fed with continuity to the hopper 3.

The example shown illustrates two scraper vanes 42, but in other embodiments there is just one or there are three or more.

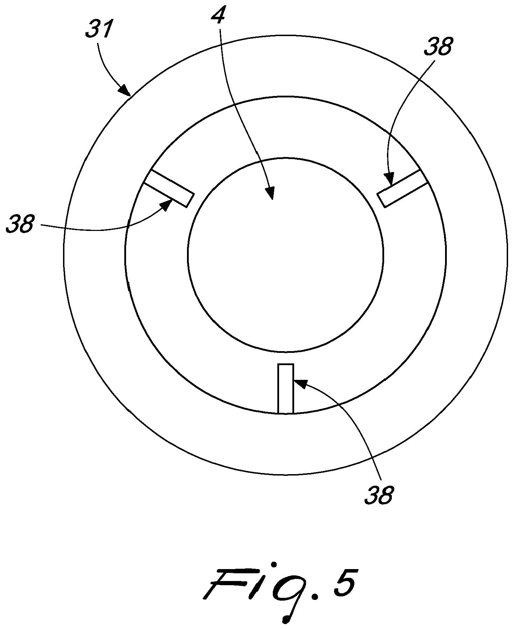

Preferably, with reference to Figure 5, the internal walls of the frustum-shaped lower portion of the hopper body 31 have rotation-preventing ribs 38, which protrude from the internal walls in a radial direction towards the screw 4; said ribs 38 (of which three are shown but which may be present in any number) prove themselves useful to prevent the mass of fragments FP from rotating together with the screw 4 in operation, which would hinder its descent toward the duct 5.

Following the flow of the fragments FP in the apparatus 1, they therefore pass from the tank 13 to the duct 11 and from there enter the feed hopper 3.

Downstream of the hopper 3 and connected thereto there is the conveyance duct 5, which connects it to the extruder 2; in a fully general way, in the conveyance duct 5 an air extraction system is provided which draws an air flow in the duct and conveys it into the outside environment, thus reducing the internal pressure of the duct to values lower than the ambient values.

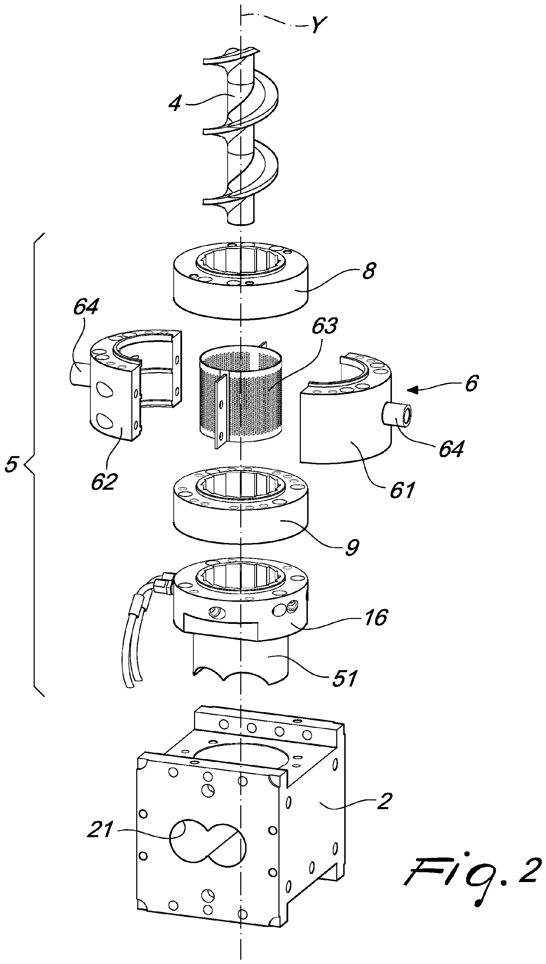

More particularly and with reference to Figure 2, the conveyance duct 5 forms inside it a conveyance volume for the fragments of thermoplastic film FP contained in the hopper 3.

The duct 5 therefore extends between the hopper body 31 (starting from the smaller end face of its frustum-shaped lower portion) and an output end 51 which is configured to feed a chamber 21 of the extruder 2 in which at least one extrusion screw is active.

As can be seen, in at least part of the conveyance volume of the conveyance duct 5 (preferably in all of the volume of the duct 5, as in the accompanying drawings) at least part of the transfer screw 4 is active for the forced conveyance of the fragments of thermoplastic film from the hopper body 31 to the chamber 21 of the extruder 2.

With reference to Figure 2, it shows an exploded detail view of the conveyance duct 5 and of part of the screw 4; as can be noted, the conveyance duct 5 comprises an extraction system, which in turn has at least one extraction portion 6 for the extraction of an air flow from the conveyance volume; in said extraction portion 6 there is at least one filtering unit 63 in order to separate the fragments of thermoplastic film FP from the extracted air flow.

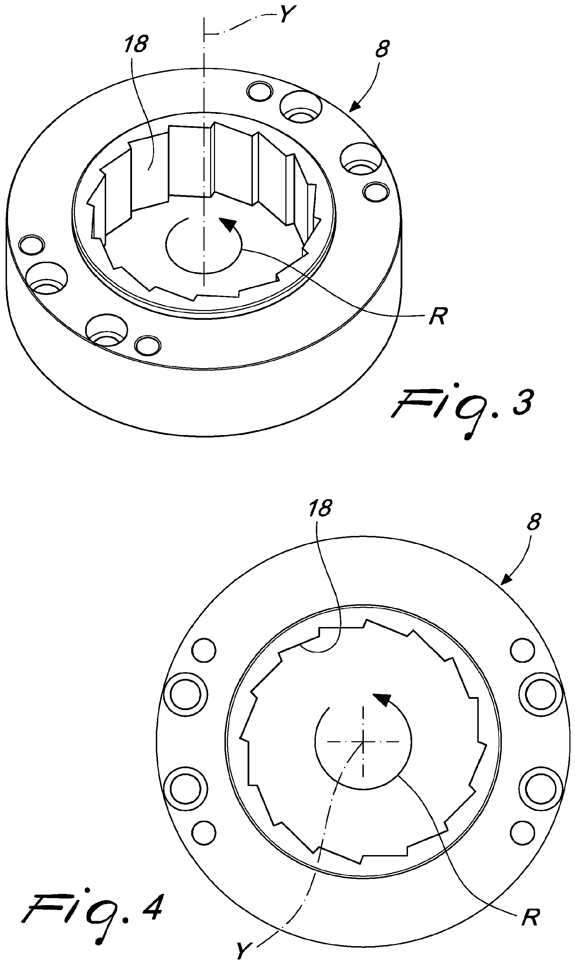

The conveyance duct 5 preferably also comprises a first flow breaker portion 8, which comprises sawtooth-shaped internal duct walls and is also shown in Figures 3 and 4.

Preferably, the first flow breaker portion 8 has a ratio between the length h1 and the diameter d equal to or greater than 0.4 (h1/d > 0,4), where the term length h1 refers to the extension along the longitudinal axis Y and the term diameter d refers to the inside diameter of the conveyance duct 5 in the flow breaker portion 8 (i.e., the diameter of the minimum circumference inscribed in the conveyance duct 5, which is therefore tangent to the innermost ends of the sawtooth-shaped teeth).

The conveyance duct 5 further comprises (following the transit of the fragments FP) an extraction portion 6 and preferably a second flow breaker portion 9 which is similar to the first flow breaker portion 8.

Preferably, the first and second floor breaker portions 8, 9 each have a ratio between the length h1 and the diameter d equal to or greater than 0.4 (h1/d > 0,4), where the term length h1 refers to the extension along the longitudinal axis Y and the term diameter d refers to the inside diameter of the conveyance duct 5 in the flow breaker portion 8 (i.e., the diameter of the minimum circumference inscribed in the conveyance duct 5, which is therefore tangent to the innermost ends of the sawtooth-shaped teeth).

In the flow breaker portions 8, 9, the interference of the sawtooth-shaped teeth with the flow of the fragments FP contrast the rotational motion of said fragments about the rotation axis Y of the transfer screw 4; the Applicant has in fact noted in its experiments that one problem that occurs when conveying said fragments with this screw 4 is related to the fact that said fragments, suspended in the air, tend in some conditions to rotate together with the screw 4, thus reducing the mass flow rate of fragments conveyed toward the output port of the duct; these advantages are optimized if the rotation-preventing ribs 38 cited above are also provided.

In greater detail, the sawtooth-shaped internal duct walls of the flow breaker portion 8, 9 have a diameter that is slightly larger than the maximum diameter of the screw 4 (the size difference is just enough to avoid interference or contact between the walls of the flow breaker portion 8, 9 and the screw 4, in order to avoid hindering its rotation).

For example, when the screw 4 has a maximum diameter of 150 mm, the radial space that is free between it and the internally most protruding part of the sawtooth-shaped internal duct walls of the flow breaker portion 8 is approximately 1 mm.

The toothing of the sawtooth profile is oriented oppositely to the rotation of the screw 4; said sawtooth profile has the function of retaining the fragments of thermoplastic film that during operation are adjacent to the internal walls of the flow breaker portion 8, 9, facilitating their advancement toward the output end 51.

An extraction of an air flow is applied in the extraction portion 6, with a negative pressure preferably comprised between -0.1 bars and -0.5 bars, in order to compact the fragments of thermoplastic film; a compaction and/or packing of the fragments of thermoplastic film is thus produced, reducing the air that is loaded into the chamber 21 of the extruder 2.

The extraction portion 6 is preferably provided at least with a filtering unit 63 in order to separate the fragments of thermoplastic film from the extracted air, which preferably has the shape of a cylindrical drum 66 which is open at its opposite end faces.

Preferably, the filtering unit 63 is made of metal (for example steel) and has a side wall provided with holes which have a diameter comprised between 0.5 and 3 mm, even more preferably approximately equal to 2 mm: the Applicant has in fact noted that these dimensions constitute an optimum balancing between the passage of a sufficient flow of air and the retention of the fragments of thermoplastic film in the duct. Of course, the fragments that are smaller than the holes of the filtering element pass through it and are therefore removed together with the extracted air flow: in this case, downstream of the filtering element 63, externally to the conveyance duct 5, there is optionally an additional filtering element (for example a cyclone separator, a filter, an accumulation chamber or the like) which retains the fragments of thermoplastic film that have passed through the filtering unit 63.

The extraction portion 6 can be provided, as an alternative, as an insert applied to the duct 5 or (as in the preferred and illustrated embodiment) it can be a portion of the conveyance duct 5: in this case, as shown, the extraction portion 6 comprises two shell parts 61, 62 which can be mutually coupled in order to form at least partly the conveyance volume.

Each shell part 61, 62 forms internally a semi cylindrical internal side wall, in which there is at least one extraction channel which is open toward the conveyance volume and in fluid communication with at least one extraction flange 64.

Even in other embodiments in which the two shell parts are not present, there is in any case the at least one extraction channel 71 which is open toward the conveyance volume and is in fluid communication with the at least one flange 64.

The at least one extraction flange 64, with which the extraction portion 6 of the conveyance duct 5 is provided, can be connected to an extraction source (for example a pump, not shown) which is configured to apply, in the duct 5, said negative pressure comprised between -0.1 bars and -0.5 bars by extracting air from the volume inside the conveyance duct 5.

The air flow drawn from the flange or flanges 64 is then optionally filtered further and optionally returned into the environment.

Optionally, there is also a step for cleaning the filtering unit 63 by injecting a fluid (for example in air) under pressure.

For this purpose, in this embodiment, the flanges 64 are functionally connected also to a source of a pressurized fluid, for example compressed air: in this manner it is possible to use the flanges 64 to inject air (or, equivalently, another cleaning fluid) and clean the filtering unit 63 of the fragments of thermoplastic film that have become jammed in the holes of the filtering unit 63, thus avoiding their clogging.

In other embodiments, instead, there are injection flanges which are dedicated (therefore different from the flanges 64) and are connected to the pressurized fluid source, so as to provide, in a manner similar to what has been described above, the step of cleaning the filtering unit 63 by injection of fluid under pressure.

One advantageous effect of the passage in the flow breaker portions 8 and 9 is constituted by the fact that they create an accumulation (a sort of "head") of fragments directly upstream and downstream of the extraction portion 6: this accumulation reduces the possibility that the air extracted in this extraction portion 6 is the air contained in the hopper 3 and further reduces the possibility that the extracted air might create a rising flow which aspirates the fragments that are already located downstream of the extraction portion 6.

Therefore, according to an optional and advantageous characteristic, the method that is provided in the apparatus 1 also comprises the step of generating an accumulation of fragments of thermoplastic film directly upstream and downstream of the extraction portion 6.

Advantageously, the transfer screw 4 rotates about its own rotation axis Y at a speed comprised between 50 and 200 RPM; the Applicant has noted that this speed is particularly useful to have optimum loading.

The Applicant has in fact noted in its experiments that the synergistic combination of the speed of the screw 4 comprised between 50 and 200 RPM, of the extraction pressure comprised between -0.1 bars and -0.5 bars and of the particular ratio between the length h1, h2 and the diameter d of the flow breaker portions 8, 9 produces a surprising effect of optimization of the feeding process, in which the disadvantageous effects of extraction are almost completely eliminated and the efficiency of the extrusion process increases significantly, allowing to overcome the limitations of the background art.

In particular, the Applicant has discovered that the combination between the feed screw 12, the fact that the hopper 3 is hermetic, open only onto the duct 11, the flow breaker portions 8, 9, located upstream and downstream of the extraction portion 6 (and having a ratio between length and diameter equal to or greater than 0.4) entails an optimum "natural" seal, which is due to the fact that the fragments FP, in the tank 12, in the hopper 3 and in the duct 5, allow to extract the air efficiently and thus increase the dosage capacity of the apparatus 1 in the extruder 2.

Preferably, the conveyance duct 5 is further provided with at least one cooling unit in order to keep its internal surfaces at a temperature lower than 80°C and thus avoid sticking of the fragments FP. For this purpose, in these embodiments the conveyance duct 5, and more precisely at least one from (preferably all) the first flow breaker portion 8, the extraction portion 6 and the second flow breaker portion 9 is provided with a cooling system (for example cooling channels in which a heat transfer fluid flows) in order to contrast the temperature increase.

Preferably, the conveyance duct is kept substantially at ambient temperature (usually between 15°C and 35°C).

The fragments of thermoplastic film have an apparent density of less than 0.35 kg/dm³ and preferably an irregular shape and dimensions in plan view comprised between 200 micrometers and 5 centimeters; preferably, said fragments derive from a preliminary operation of shredding a sheet of plastic material, preferably thermoplastic material.

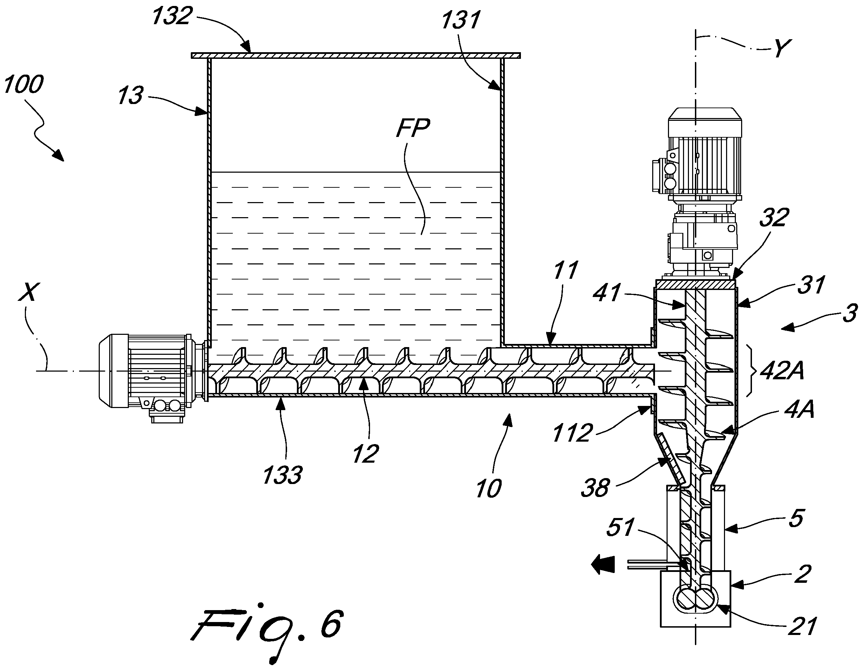

Turning now to Figure 6, that shows a second-embodiment 100 of the apparatus according to the invention, as already mentioned above the same reference numerals designate the same parts that are shared between the apparatus in the first embodiment 1 and in the second embodiment 100.

Likewise, the method that is provided in the apparatuses 1 and 100 is the same.

The only difference between the second embodiment 100 and the first embodiment 1 resides in practice in the movement device in order to avoid the accumulation of the plastic fragments in said region.

In this second embodiment 100, in fact, instead of this scraper vanes 42, the scraper blade of the movement device comprises a portion 42A of the transfer screw 4A which for this purpose faces the open port of the feed duct 11.

In particular, as can be seen in Figure 6, the transfer screw 4A extends in the hopper body 31, preferably substantially along the entire vertical extension thereof, so that a portion 42A thereof faces the open port of the feed duct 11.

The transfer screw 4A is sized so that the screw portion 42A that extends in the cylindrical portion of the hopper body 31 has a helicoid with a maximum diameter that is approximately equal to, slightly smaller than, the inside diameter of the upper cylindrical portion of the hopper body 31; in this matter, during operation, the helicoid of the screw 4A, at the screw portion 4A that faces the port of the duct 11, skims the open port of the feed duct 11 and thus clears it of any accumulations of the plastic fragments, conveying them downward, i.e., towards the frustum-shaped part of the hopper body 31.

As a whole, therefore, the screw 4A has a lower portion with a frustum-shaped helicoid and an upper portion 42A with a cylindrical helicoid.

The operation of the invention is clear and evident from what has been described.

In practice it has been found that the invention achieves the intended aim and objects, since it allows to provide the loading of the fragments of thermoplastic film into the extruder so as to optimize the operating parameters and the efficiency thereof, avoiding the feeding of an excessive air flow.

A further advantage of the invention is to reduce the cost and complexity of the method and/or of the apparatus in which it is implemented.

Another advantage of the invention is to offer the greatest assurances of reliability and safety in use.

Another advantage of the invention is to simplify the embodiment, making it also economically competitive.

The method and the apparatus thus conceived are susceptible of numerous modifications and variations, all of which are within the scope of the appended claims.

All the details may furthermore be replaced with other technically equivalent elements.

In practice, the materials used, so long as they are compatible with the specific use, as well as the contingent shapes and dimensions, may be any according to the requirements.

The disclosures in Italian Patent Application No. 102021000008426 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for loading fragments of thermoplastic film (FP) in an extruder (2) comprising
- a hopper (3) with at least one hopper body (31),
- a transfer screw (4), which extends at least partially in the hopper body (31) and has a substantially vertical rotation axis (Y),
- a conveyance duct (5), which is connected between the hopper (3) and an extruder (2) and in which a part of the transfer screw (4) is accommodated and acts, said conveyance duct (5) comprising at least one air extraction system (6) configured to extract an air flow at least in said duct (5),
**characterized in that**
the apparatus (1) further comprises:
- a filling tank (13) and
- a screw feeder (10) which connects the filling tank (13) to the hopper (3) in order to load into the latter fragments of thermoplastic film (FP) contained in the tank (13),
said hopper body (31) being closed hermetically toward the outside environment and functionally connected to said screw feeder (10), so that in the operating condition of the apparatus (1) the hopper body (31) has an internal pressure that is lower than the external ambient pressure.

2. The apparatus (1) according to the preceding claim, wherein the screw feeder (10) comprises a feed duct (11) and a feed screw (12) inside it, the feed screw (12) extending, even along part of its length, inside said filling tank (13).

3. The apparatus (1) according to the preceding claim, wherein the feed screw (12) of the screw feeder (10) has a substantially horizontal rotation axis (X).

4. The apparatus (1) according to one or more of the preceding claims, wherein the hopper body (31) comprises a frustum-shaped lower portion surmounted by a cylindrical upper portion, at which the feed duct (11) of the screw feeder (10) is coupled hermetically, said feed duct (11) leading into the body (31) at the cylindrical upper portion thereof, said transfer screw (4) extending along at least part of the lower frustum-shaped portion of the body (31).

5. The apparatus (1) according to one or more of the preceding claims, comprising at least one movement device configured to avoid the accumulation of fragments of thermoplastic film (FP) in the upper part of the hopper, preferably said movement device comprising at least one scraper blade (42, 42A) designed to pass, during an active condition of the apparatus, so as to skim the open mouth of the duct (11), said scraper blade (42, 42A) being preferably coupled to the shaft (41) of the transfer screw.

6. The apparatus (1) according to one or more of the preceding claims, wherein the lower frustum-shaped portion of the hopper body (31) is provided with internal walls provided with at least one, preferably a plurality of rotation-preventing ribs (38) which protrude from the internal walls in a radial direction toward the screw (4).

7. The apparatus (1) according to one or more of the preceding claims, wherein the extraction system provides for at least one extraction portion (6) along the duct (5), said extraction portion (6) comprising a filtering unit (63) for separating the fragments of thermoplastic film (FP) from the flow of extracted air.

8. The apparatus (1) according to one or more of the preceding claims, wherein the conveyance duct (5) preferably comprises a first flow breaker portion (8) and a second flow breaker portion (9) which are arranged along the duct (5) upstream and downstream of the extraction portion (6), said first and second flow breaker portions (8, 9) comprising sawtooth-shaped internal duct walls.

9. The apparatus (1) according to the preceding claim, wherein the first and second flow breaker portions (8, 9) each have a ratio between the length (h1) and the diameter (d) equal to or greater than 0.4, wherein the term length (h1) refers to the extension along said longitudinal axis (Y) and the term diameter (d) refers to the inside diameter of the conveyance duct (5) at the flow breaker portion (8).

10. A method of operation of an apparatus (1) according to one or more of the preceding claims, wherein:
the transfer screw (4) rotates about its own rotation axis (Y) at a rate comprised between 50 and 200 RPM,
an extraction of a flow of air, with a negative pressure preferably comprised between -0.1 bars and -0.5 bars, is applied in the extraction portion (6),
a filtering of the extracted air is performed in the extraction portion (6) by means of a filter which has holes that have a diameter comprised between 0.5 and 3 mm, preferably approximately equal to 2 mm,
the conveyance duct is kept substantially at a temperature lower than 80°C, preferably at a temperature comprised between 15°C and 35°C
so as to allow the treatment of fragments of thermoplastic film (FP) that have a maximum piece size comprised between 200 micrometers and 5 centimeters and a density lower than 0.35 kg/dm³ loaded into the tank (13).
